# EUROPEAN PATENT APPLICATION

(11) **EP 2 179 773 A1**
(43) Date of publication of application: **28.04.2010**
(21) Application number: 08765447.1
(22) Date of filing: 11.06.2008
(51) Int. Cl.: A63F 13/12, A63F 13/00, A63F 13/10, G06F 11/34

(54) **GAME SYSTEM, TERMINAL DEVICE AND COMPUTER PROGRAM**

(30) Priority: 02.08.2007 JP 2007201729
(71) Applicant: Konami Digital Entertainment Co., Ltd., Tokyo 107-8324 (JP)
(72) Inventor: TAKAHASHI, Masanaka, Tokyo 107-8324 (JP)
(74) Representative: Haley, Stephen
(86) International application number: PCT/JP2008/060668
(87) International publication number: WO 2009/016889

(57) **Abstract**

There is provided a game system which is considered about synchronism of game sate in each terminal device under a data communication environment having a timelike restriction. A terminal device T1 includes a operation process unit 22, a history information transmission unit 24, and a history information process unit 25. The operation processing unit 22, each time an operation is performed by a player PA, while displaying in the first display unit G1 the game screen corresponding to the operation, accumulates the operation information 31 corresponding to the operation in the game history information 30 in the history information storage unit 21. When it is decided to be transmittable by the transmission decision unit23, the history information transmission unit 24 transmits the game history information 30 to the other terminal device T2. The history process unit 25, when receiving the game history information 30 from the other terminal devices, simulates the change of the game state of the other terminal device based on the operation information 31 accumulated in the game history information 30, and display the result of the simulation in the second display portion G2.

## Description

### Technical Field

The present invention relates to a game system in which a game is executed among a plurality of terminal devices by utilizing data communication, a terminal devices thereof and a computer program.

### Background Art

A game system in which a game is executed among a plurality of terminal devices by utilizing data communication is well known (see Patent Documents 1 and 2). In such game systems, it is configured such that a state of the game in another terminal device can be grasped in its own terminal device. However, especially in a case of a mobile terminal device, the communication state is unstable. Additionally, there are some cases where a restriction regarding transmittable time (for instance, a maximum number of times of transmission in a second) is set previously by a communication company. Therefore, in the game system utilizing data communication, there is a problem of having difficulty in synchronizing the state of the game between each of the terminal devices. Then, some methods for solving this problem are also proposed (see Patent Document 3).
[Patent Document 1] JP-A No.2006-288769
[Patent Document 2] JP-A No.2007-151602
[Patent Document 3] JP-A No.10-235017

### Disclosure of Invention

### Problems to be Solved by the Invention

However, the above proposal is aimed only to attempt synchronization of the final state of the game and it is not considered to attempt synchronization of the state of the game in each of the terminal devices while the game is being played. Therefore, the game is advanced by delayed data without controlling the delayed data. Concretely, every time data indicating a game state regarding a player X is updated, the updated data is transmitted to a competitor Y, and in a terminal device of the competitor Y, a state of the player X is only updated based on the received updated data. Therefore, in a case of a game where state of the game is very often updated, there is a problem of increasing communication traffic to occur communication delay. In addition, in a case where there is a restriction regarding transmittable time, there is a problem that it is not possible to transmit updated data to another terminal device at a moment of updating.

Hence, the present invention aims to provide a game system considering synchronism of the state of the game among between plurality of terminal devices in data communication environment having timelike restriction, a terminal device in the game system and a computer program.

### Means to Solve the Problems

Above mentioned problems are solved as follows. A game system of the present invention is a game system, in which a game is executed in each of a plurality of terminal devices, the terminal device having a communication unit capable of sending/receiving a state of the game to/from the other terminal device, and a maximum number of times of communication in a predetermined time period through the communication unit is set previously, wherein the terminal device comprises: a first display portion which displays the state of the game in its own device; a second display portion which displays the state of the game in the other terminal device; a game control portion which controls game advancement in its own device; and a competitor's display control portion which controls display in the second display portion, the game control portion comprises: a history information storage unit which stores game history information including history of operation performed by a player on the terminal device; an operation process unit which, every time an operation is performed by the player on the terminal device, displays the state of the game corresponding to the operation in the first display portion and accumulates operation information corresponding to the operation in the game history information in the history information storage unit; a transmission decision unit which decides if the game history information is transmittable from the communication unit based on the maximum number of times of communication; and a history information transmission unit which, when the transmission decision unit decides that the game history information is transmittable, transmits the game history information in the history information storage unit from the communication unit to the other terminal device, the competitor's display control portion comprises: a competitor's state storage unit which stores the state of the game in the other terminal device; and a history process unit which, when the game history information is received from the other terminal device, simulates change of the state of the game in the competitor's state storage unit based on the operation information accumulated in the game history information and displays simulation result in the second display portion.

According to the game system of the present invention, every time an operation is performed by the player, operation information is accumulated in the game history information by the operation process unit, and the game history information is, in a case where the transmission decision unit decides that the situation is transmittable, transmitted to the other terminal device by the history information transmission unit. On the other hand, when the game history information is received from the other terminal device, change of the state of the game in the competitor's state storage unit is simulated by the history process unit in order of operation performed to the other terminal device based on the operation information accumulated in the game history information. Then, the simulation result is displayed in the second display portion. Accordingly, in the present invention, every time an operation is performed by the player, the operation information of that is not transmitted to the other terminal device, but the operation information is accumulated until it is decided that operation information is transmittable, and when it is decided to be transmittable, the accumulated operation information is transmitted to the other terminal device. Then, the state in the other terminal device is not displayed in the second display portion successively, the state changing due to operation performed by the player on the other terminal device, but only result of the changes is displayed in the second display portion as the latest state in the other terminal device.

Thereby, even if it is a communication situation in which the operation information is not allowed to be transmitted every time an operation is performed by the player, it is possible to always display the latest game state in the second display portion which shows a game state in the other terminal device. Moreover, in a case the processing for synchronization among the terminal devices is executed by a relation between a server and a client, only at the timing when a terminal device to be a server comes into a transmittable state, it is possible to attempt the synchronization. On the other hand, in the present invention, since in each of the terminal devices, the same structure is possessed and the synchronization is attempted at the timing when each of the terminal devices comes into a transmittable state, it is possible to further enhance synchronism. In addition, in the present invention, the game state is not transmitted to the other terminal device, but the game history information is transmitted, the game history information including accumulated operation information each corresponding to an operation performed by the player. Consequently, if the operation information is considered as information indicating only one operation key which is performed by the player, it is possible to require less amount of information than the case of transmitting the game state, and the communication speed can be accelerated.

The operation information to be accumulated in the game history information is accumulated in the order each operation is performed, and the history process unit may execute the simulation under the assumption that the order of each operation is accumulated is the order each operation is performed. Also, it may be configured so that order information indicating the order each operation is performed is added to the operation information for the history process unit to realize the order each operation is performed by referring to the order information. In a game system having more than two other terminal devices, it may be configured such that identification information is added to each of the other terminal devices for them to be identified thereby. As a game of the present invention, for instance, a fighting game, which is executed in each of the terminal devices independently for players to compete in the result of that, can be considered.

The history information transmission unit may transmit to the other terminal device the game history information which has been accumulated in the history information storage unit later than the game history information which has been already transmitted. Thereby, all of the time, only the operation information which is newly accumulated in the game history information is transmitted to the other terminal device.

Also, the operation process unit may decide if the state of the game corresponding to the operation performed by the player is a specific state, in a case of the specific state, specific information indicating the specific a state may be associated with operation information of the operation and stored in the game history information, and the history process unit, in a case where the game history information includes the specific information, may display the specific state indicated by the specific information in the second display portion before displaying the simulation result.

Thereby, usually in the second display portion, though only the result of the simulation is displayed as game state in the other terminal device, the simulation being executed by the game history information, in a case where the specific state is generated in the game in the other terminal device, the specific state can be displayed. That is, in the second display portion, it is only the simulation result that is basically displayed as game state of the competitors, and the game state during the simulation is not displayed. However, when there is important information, it is possible to form an image based on the information to make the image interrupt for its display before the simulation result is displayed, and later on, display the simulation result. If an important state in the game is set as the specific state, it is possible to always notify the competitors of the important state. In addition, in the second display portion, it does not matter which the display indicating that the specific state has occurred is the same as the display in the first display portion in its own device.

The operation process unit, when influence condition to give a predetermined influence to the state of the game in the other terminal device is satisfied in the state of the game in its own device, may store influence execution information in the game history information, the influence execution information indicating that the influence condition has been satisfied, and, in a case where the game history information received from the other terminal device includes the influence execution information, may give to the state of the game in its own device influence indicated by the influence execution information, and may accumulate as the game history information, influence reception information which indicates that the influence has been given, and the history process unit, in a case where the influence reception information is included in the game history information received from the other terminal device, may display in the second display portion the state of the game where the influence is reflected.

Thereby, when the influence condition is satisfied in the game state in its own device, the influence can be given to the game state in the other terminal device. Then, after the influence corresponding to the influence condition is actually reflected in the game state in the other terminal device, the reflected condition can be displayed in the second display portion. The influence corresponding to the influence condition is not reflected in the display in the second display portion right after the influence condition is satisfied, but it is reflected in the second display portion after actually being reflected in the other terminal device. Therefore, the game state in the other terminal device can be replayed more faithfully in the second display portion. The "influence condition" includes a case where the state of the game has become a predetermined condition, a case where operation is performed by a player to give influence directly, or the like. The "influence" includes a case of simply displaying letters etc. in a game screen in the other terminal device, a case of giving damage to the state of the game in the other terminal device, or the like.

In the above invention, the operation process unit, in the game executed in its own device, may associate timing information with the influence reception information and accumulates the timing information in the game history information, the timing information indicating timing when the influence indicated by the influence execution information has been given to the state of the game in its own device, the history process unit, in a game displayed in the second display portion, at the timing corresponding to the timing information associated with the influence reception information, may display in the second display portion the state of the game where the influence is reflected.

Thereby, at the same timing as the timing when the influence based on the influence condition has been reflected in the game in the other terminal device, the influence is reflected in the game state displayed in the second display portion. Hence, the state of the game in the other terminal device which is replayed in the second display portion can be replayed more faithfully. For recognizing the timing, there are some methods such as: using a timer to measure elapse time from the beginning of a game; deciding depending on an extent of advancement of stage which has been prepared in predetermined order; or deciding depending on the state of display of displaying body to be displayed during the game in a predetermined order.

Above mentioned problems are solved as follows. A terminal device of the present invention is a terminal device in which a predetermined game advancing according to operation performed by a player is executed, a communication unit capable of sending/receiving state of the game to/from another terminal device is mounted, and a maximum number of times of communication in a predetermined time period through the communication unit is set previously, wherein the terminal device comprises: a first display portion which displays the state of the game in its own device; a second display portion which displays the state of the game in the other terminal device; a game control portion which controls game advancement in its own device; and a competitor's display control portion which controls display in the second display portion, the game control portion comprises: a history information storage unit which stores game history information including history of operation performed by the player on the terminal device; an operation process unit which, every time an operation is performed by the player on the terminal device, displays the state of the game corresponding to the operation in the first display portion and accumulates operation information corresponding to the operation in the game history information in the history information storage unit; a transmission decision unit which decides if the game history information is transmittable from the communication unit based on the maximum number of times of communication; and a history information transmission unit which, when the transmission decision unit decides that the game history information is transmittable, transmits the game history information in the history information storage unit from the communication unit to the other terminal device, the competitor' s display control portion comprises: a competitor's state storage unit which stores the state of the game in the other terminal device; and a history process unit which, when the game history information is received from the other terminal device, simulates change of the state of the game in the competitor's state storage unit based on the operation information accumulated in the game history information and displays simulation result in the second display portion.

Above mentioned problems are solved as follows. A computer program of the present invention is a computer program for making a terminal device function, the terminal device being one of a plurality of terminal devices in a game system in which a game is executed in each of the plurality of terminal devices, the terminal device having a communication unit capable of sending/receiving a state of the game to/from the other terminal device, and a maximum number of times of communication in a predetermined time period through the communication unit is set previously, wherein the computer program makes the terminal device function as: a first display portion which displays the state of the game in its own device; a second display portion which displays the state of the game in the other terminal device; a game control portion which controls game advancement in its own device; and a competitor's display control portion which controls display in the second display portion, the game control portion functions as: a history information storage unit which stores game history information including history of operation performed by a player on the terminal device; an operation process unit which, every time an operation is performed by the player on the terminal device, displays the state of the game corresponding to the operation in the first display portion and accumulates operation information corresponding to the operation in the game history information in the history information storage unit; a transmission decision unit which decides if the game history information is transmittable from the communication unit based on the maximum number of times of communication; and a history information transmission unit which, when the transmission decision unit decides that the game history information is transmittable, transmits the game history information in the history information storage unit from the communication unit to the other terminal device, the competitor' s display control portion functions as: a competitor's state storage unit which stores the state of the game in the other terminal device; and a history process unit which, when the game history information is received from the other terminal device, simulates change of the state of the game in the competitor's state storage unit based on the operation information accumulated in the game history information and displays simulation result in the second display portion.

### Effect of the Invention

As stated above, according to the present invention, operation information is accumulated in the game history information until it is decided that the game history information is transmittable, and the game history information is transmitted to the other terminal device in a case of transmittable. Also, when the game history information is received from the other terminal device, change of the state of the game in other terminal device is simulated in order of operation performed in the other terminal device based on the operation information accumulated in the game history information, and only the simulation result is displayed as the game state in the other terminal device. Thereby, it is possible to provide a game system considering synchronism of the game state among each of the terminal devices and a terminal device in the game system and a computer program.

### Brief Description of the Drawings

Fig. 1 shows an example of a game system of the present invention;
Fig.2 shows a game screen of a game provided in the game system shown in Fig.1;
Fig.3 shows an attacking screen of the game provided in the game system shown in Fig.1;
Fig.4 shows a hardware structure of a terminal device of the game system shown in Fig.1;
Fig.5 shows a data structure of game history information in the present embodiment;
Fig.6 shows a data structure of game state information in the present embodiment;
Fig.7 is a sequence diagram showing flow of processes regarding the game history information;
Fig.8 is a flow chart showing flow of processes executed in operation input process;
Fig.9 is a flow chart showing flow of processes executed in simulation process;
Fig. 10 is a sequence diagram showing flow of processes executed in a case where attack operation has been performed in the terminal device.
Fig.11 is a flow chart showing flow of processes executed in attack reception process.
Fig.12 is a flow chart showing flow of processes executed in attack result process.

### Best Mode for Carrying out the Invention

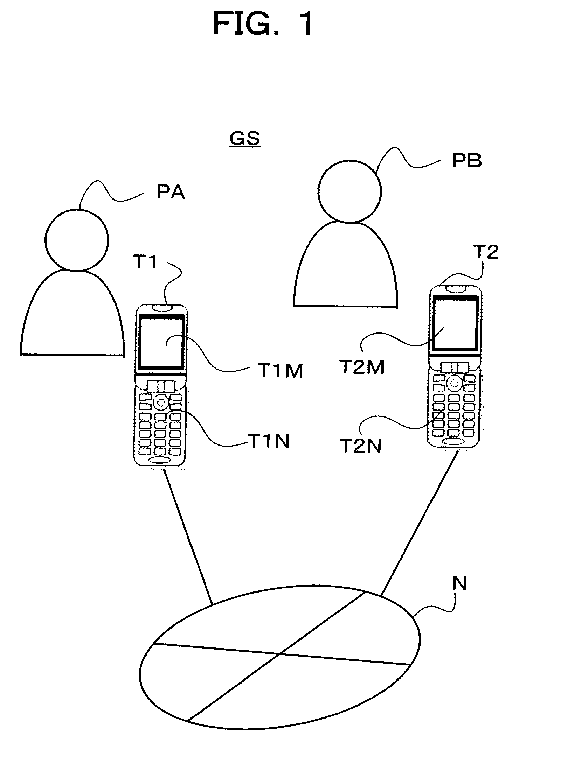

Fig.1 shows an embodiment of a game system GS of the present invention. The game system GS of the present invention is composed of terminal devices T1 and T2 capable of data communication through a network N with each other. The terminal device T1 is operated by a player PA, and the terminal device T2 is operated by a player PB. The terminal devices T1 and T2 of the present embodiment have a same structure. Each of them is a movable phone which has a monitor T1M, T2M to display state of a game and an input portion T1N, T2N to accept players' input. In the game system of the present invention, a maximum number of times of data transmission in each of the terminal devices T1, T2 is set to be one time in 0.5 seconds.

Hereinafter, when it is not necessary to distinguish the terminal device T1 from the terminal device T2, each of them is called "a terminal device T." Also, when it is not necessary to distinguish the monitor T1M from the monitor T2M, each of them is called "a monitor TM." Moreover, when it is not necessary to distinguish the input portion T1N from the input portion T2N, each of them is called "an input portion TN". Furthermore, when it is not necessary to distinguish the player PA from the player PB, each of them is called "a player P" or "a competitor P".

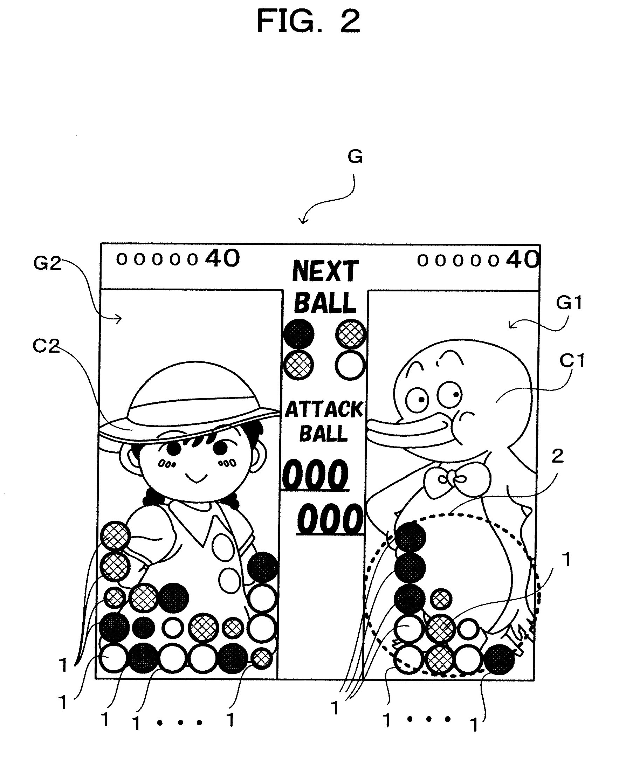

A game provided in the game system GS and a game screen G displayed in the monitor TM in the terminal device T while the game is played will be described by utilizing Fig.2. The game screen G is composed of: a first game screen G1 as the first display portion in which state of the game is displayed, the game being executed in the terminal device T having the game screen G (hereinafter this terminal device is called "its own device T."); and a second game screen G2 as the second display portion in which state of the game of the competitor P is displayed. In the first game screen G1, a character C1 is displayed as an avatar of the player P which operates its own device T. In the second game screen G2, a character C2 is displayed as an avatar of the competitor P.

In the game system GS, a network-type fighting game is provided. In the fighting game, a same game is executed by the player P of each terminal device T to compete the result of that. The game its own device T is executed in the first game screen G1. Balls 1...1 as a plurality of displaying bodies appear successively in predetermined intervals on the upper side of the first game screen G1, and they fall at a predetermined speed to the lower side of the first game screen G1. When the falling ball 1 arrives at the lower side of the screen, it is piled up as a ball group 2. Hereinafter, a state in which the ball 1 is piled up at the lower side of the screen is called "the ball falls completely".

The player P can pile up the balls 1...1 in the shape of desired by controlling a falling direction of each ball 1. Concretely, the player P can control the falling direction of the ball 1 on the first game screen G1 by operating keys, such as a left key, a right key and a spin key, mounted to the input portion TN. For instance, when the balls 1...1 of a predetermined color are piled up to build a predetermined shape, the balls 1...1 can be deleted from the first game screen G1, and a score can be obtained.

In the present embodiment, a unit of period from a moment when one of the balls 1 appears to a moment when the ball 1 falls completely to the lower side of the screen is called "a turn." The Kind of the ball 1 corresponding to each turn and the order of appearance in the first game screen G1 is set in previously a computer program to make them common between the terminal devices T. For instance, in a case where it is configured such that each of the terminal devices T1 and T2 possesses a same computer program and the computer program is set so that the balls 1 appear in the screen randomly, it may be configured such that the balls appear in the same order between the terminal devices T1 and T2 by multiplying the same coefficient in the beginning of the game. It does not matter which the next ball 1 appear before or after the previous ball 1 falls completely. In addition, a plurality of the balls 1...1 may appear on the upper side of the screen at one time.

In the second game screen G2, the state of the game being executed in the terminal device T of the competitor P, i.e., the state of the ball 1 and a group of balls 2 is displayed. The display in the second game screen G2 is updated successively based on the data transmitted from the terminal device T of the competitor P. A detail display-method of the state of the game in the second game screen G2 will be mentioned later.

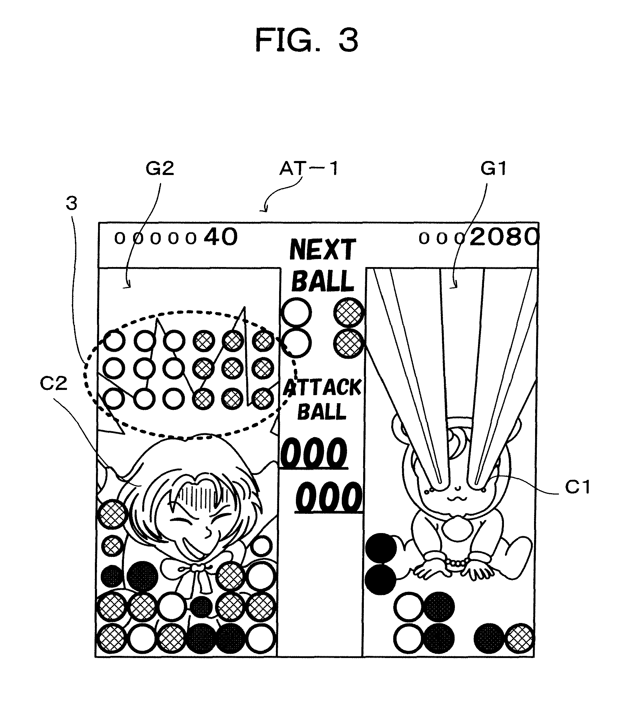

The game system GS is a fighting type game system where basically, the above mentioned game is executed individually in each of the terminal devices T and the result of that is competed. Additionally, the player P can attack the competitor P by performing attack operation. For instance, by the attack, a predetermined number of attack balls 3 can be made appear at one time in the first game screen G1 of the competitor P. An attack screen AT-1 to be displayed in the monitor T1M of the terminal device T1, in a case where the player PA of the terminal device T1 has attacked the competitor PB, is shown in Fig.3.

In the first game screen G1 in the terminal device T1, the state where the avatar C1 of the player PA is attacking is displayed and in the second game screen G2, the state where the attack balls 3 appear and give some damage to the game state of the competitor PB is displayed. In the fist game screen G1 of an attack screen AT-2 (not shown) of the terminal device T2, the state where some damage is given to the game state of the player PB by the attack balls 3 is displayed and in the second game screen G2, the state where the avatar C2 of a competitor PA is attacking is displayed.

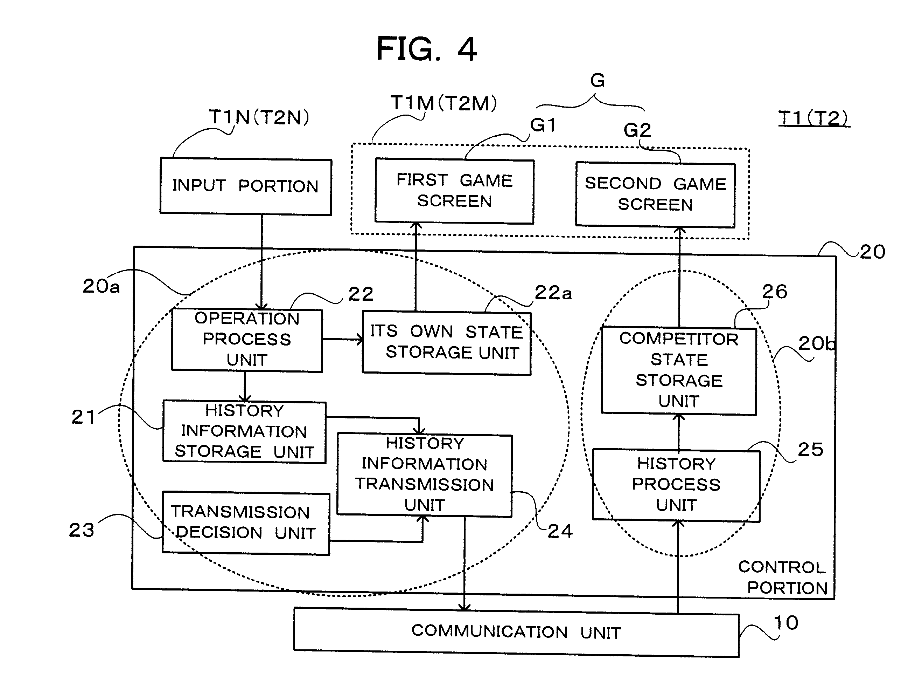

An outline of a hardware structure of the terminal device T1 is explained by utilizing Fig.4. Note, as mentioned above, the hardware structure of the terminal device T2 is the same as that of the terminal device T1. The terminal device T1 is, besides the above input portion T1N and the monitor T1M, composed of a communication portion 10 which communicates data with the terminal device T2 and a control portion 20 which controls movement of each of the structures T1N, T1M and 10. The control portion 20 functions as, so to speak, a computer having a CPU and various kinds of storage regions such as a RAM and a ROM necessary for the CPU's operation. In the ROM of the control portion 20, for instance, the computer program to realize the present invention is stored.

By a computer program to realize the present invention, the control portion 20 functions as a game control portion 20a to control game advancement in its own device and a competitor' s display control portion 20b to control state of the game displayed in the second game screen G2. The game control portion 20a functions mainly as: a history information storage unit 21; an operation process unit 22; its own state storage unit 22a; a transmission decision unit 23; and a history information transmission unit 24. The competitor's display control portion 20b mainly functions as: a history process unit 25; and a competitor state storage unit 26.

The its own state storage unit 22a stores position information of each ball 1 displayed in the first game screen G1. When the operation to the input portion T1N is performed by the player PA, the operation process unit 22, in response to the inputted operation, updates the position information of the ball 1 stored in its own state storage unit 22a and the display in the first game screen G1. At the same time, the operation process unit 22 accumulates operation information indicating inputted operation as the game history information in the history information storage unit 21. The detail of the game history information will be described later.

The transmission decision unit 23 decides if the terminal device T1 is in the state that data is transmittable from a communication portion 10. When it is decided if the terminal device T1 is in the transmittable state, it is decided based on, not only besides the restriction of the maximum number of times of transmission in a predetermined period that has been set previously, also other restriction for transmission. As the decision concerning the restriction of the maximum number of times of transmission, for instance, it could be decided based on a measurement by a timer which measures a time period until the next moment when data is transmittable. Also, in a case where a server managing intervals of transmission in each of the terminal devices is prepared in the network, it could be decided according to an inquiry to the server.

The history information transmission unit 24, in a case where it is decided that data is transmittable by the transmission decision unit 23, transmits the game history information stored in the history information storage unit 21 from the communication portion 10 to the terminal device T2. The game history information transmitted to the terminal device T2 is not transmitted at the next moment of transmission. For instance, in the history information storage unit, to the game history information which has been already transmitted, a flag may be added to recognize that it has already been sent.

The competitor's state storage unit 26 stores the state of the game of the competitor P. In the present embodiment, the state of the game stored in the competitor's state storage unit 26 is position information of each ball 1 in the second game screen G2. The history process unit 25, when receiving at the communication portion 10the game history information which has been transmitted from the terminal device T2, simulates change of position of each ball 1 by the received game history information based on the position information stored in the competitor's state storage unit 26. Then, by the simulation result, the position information in the competitor' s state storage unit 26 is updated, and updated result of that is displayed in the second game screen G2. In the position information of each ball in the its own state storage unit 22a and the competitor's state storage unit 26, the number of times of turn, color, and position of each ball are included.

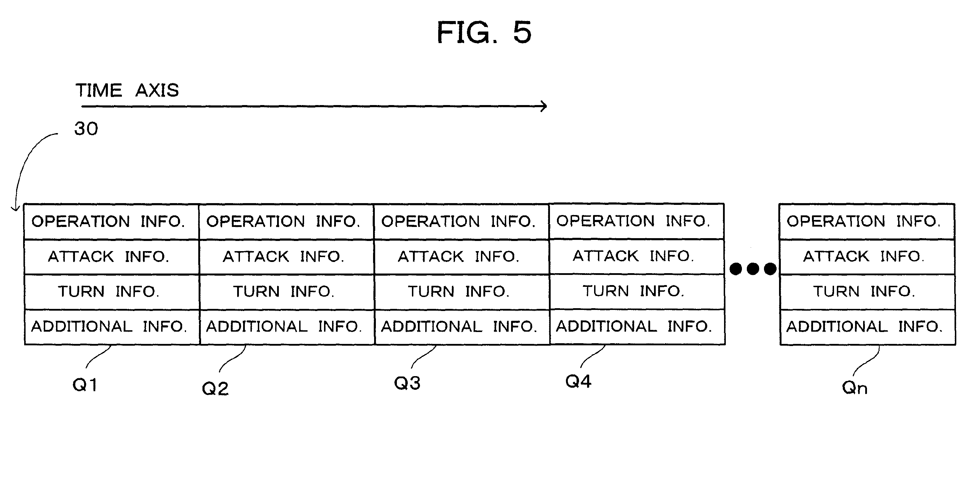

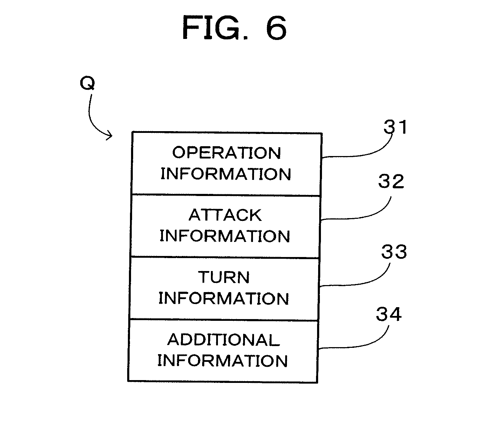

Game history information 30 stored in the history information storage unit 21 is explained by utilizing Fig. 5 and Fig.6. The game history information 30 is information including plural pieces of game state information Q1...Qn is accumulated in order of being generated. Hereinafter, when it is not necessary to distinguish each of the pieces of game state information, each is called "the game state information Q." The game state information Q is information which has: operation information 31; attack information 32; turn information 33; and additional information 34, and is generated every time an event to give an influence to the state of the game such as input operation performed by the player P etc. is occurred. The game history information 30 in Fir. 5 shows a state in which n pieces of the game state information Q from the game state information Q1 to the game state information Qn are accumulated in order of being generated.

The operation information 31 is information indicating contents of operation performed by the player P, that is, operated keys. The attack information 32 is information regarding attack in a case where the player P has performed attack operation against the competitor P. The attack information 32 includes both attack execution information for executing attack and attack reception information indicating attack has been received. Additionally, in the attack information 32, the number and the kind of attack balls 3 which are used for the attack are included. Thus, it is allowed to attack the competitor P with the attack balls 3 in accordance with the state of the game of the player P at the moment when the attack operation has been performed. However, in a case where the number and the kind of the attack balls 3 used for the attack are set previously in the game system, it is not necessary to include this information in the attack information 32. Thant is, in this case, the attack information 32 includes only the attack reception information. The turn information 33 indicates the turn on which information indicated by the game state information Q should give influence. In a case where the operation information 31 indicates operation for a ball 1, the turn information 33indicates the ball 1 of an operation object. Other information regarding the game is set in the additional information 34.

For instance, if the input operation is performed by the player P, the game state information Q is generated, in which information indicating operated keys is set as the operation information 31. Then, the game state information Q is added to the game history information 30 and stored in the history information storage unit 21. For instance, when a "left key" of the input portion TN is pressed, information indicating the "left key" is set in the operation information 31 and the turn corresponding to the ball 1 of operation object is set in the turn information 33. In this case, other items 32 and 34 are set to be blank. Additionally, in a case where the attack operation has been performed, the above attack execution information is set in the attack information 32 and other items are set to be blank. As mentioned above, each piece of respective game state information Q is composed of 4 items, but all of the items are not always set.

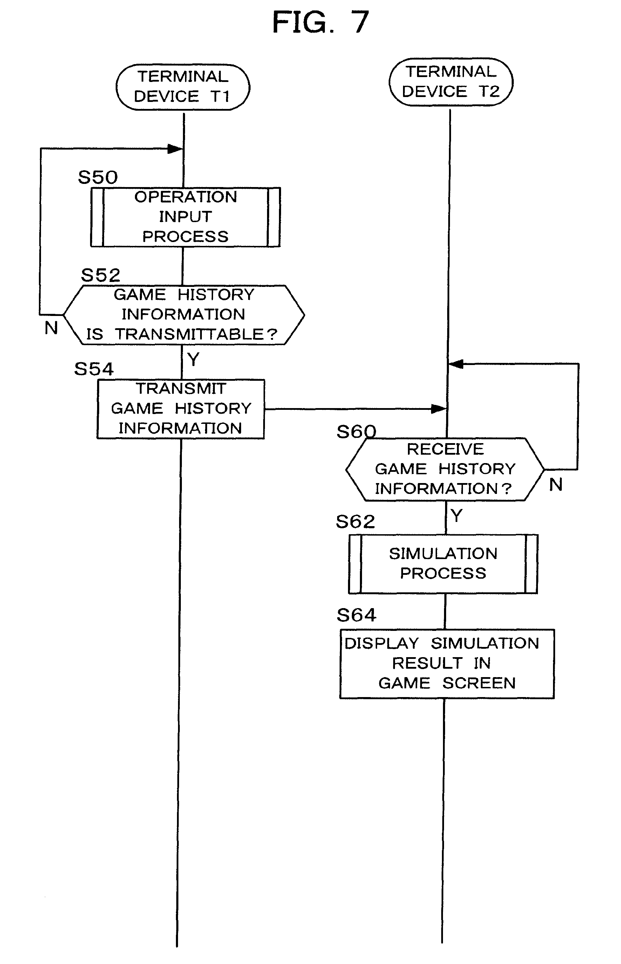

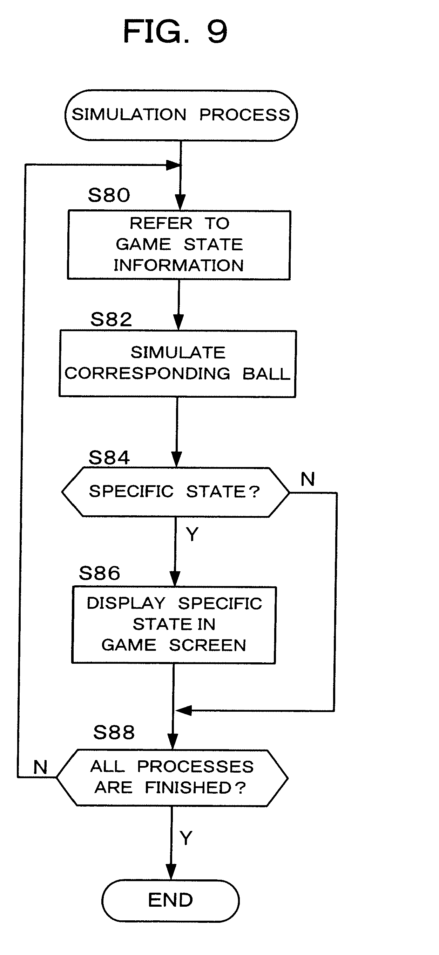

The game history information 30 is transmitted to the other terminal device T in an appropriate way, and in the other terminal device T, the state of the game of the competitor P is displayed in the second game screen G2 based on the received game history information 30. Process executed in each terminal device T regarding the game history information 30 is explained in accordance with flow charts in Fig. 7 to Fig. 9. Hereinafter, the processes will be explained in one case of example, where the game history information 30 is generated based on operation input in the terminal device T1 and processes regarding the state of the game in the terminal device T1 is executed based on the game history information 30 received at the terminal device T2. In a case where operation input is performed in the terminal device T2 and processes based on the game history information 30 is executed in the terminal device T1, similar process is also executed. In addition, the process performed in each terminal device T is controlled by the control portion 20 of each of the terminal devices T.

First, in the terminal device T1, operation input process is executed based on the input operation performed by the player PA (step S50). In the operation input process, every time the input operation is performed, the game state information Q is generated and accumulated in the history information storage unit 21 as the game history information 30. For instance, in a case where the player PA has operated with "left key," "right key," and "left key,", three pieces of the game state information Q1, Q2, and Q3 corresponding to each operation are generated. The Detail of the operation input process will be mentioned later. Additionally, the terminal device T1 decides if the game history information 30 is transmittable (step S52), and in a case where the terminal device T1 decides that the game history information 30 is transmittable, the accumulated game history information 30 is transmitted to the terminal device T2 (step S54).

The game history information 30 to be the transmission object is the game state information Q accumulated later than the moment when the game history information 30 was transmitted and until the moment when it is decided to be transmittable. Depending on the state of operation by the player, the number of pieces of the game state information Q included in the game history information 30 to be transmitted is not constant. The game history information 30 which has already been transmitted may be deleted from the history information storage unit 21 or given a flag indicating that it has been already transmitted.

On the other hand, in the terminal device T2, it is watched if the game history information 30 has been received from the terminal device T1 (step S60). In a case where it is decided to be received, simulation process is executed by the received game history information 30 (step S62). In the simulation process, the state of the game of the player PA is obtained as the latest state based on the game history information 30. The detail of simulation process will be mentioned later. Next, the procedure progresses to step S64 where the state of the game of the player PA obtained by the simulation process is displayed in the second game screen G2 in the terminal device T2. Specifically, as the result of the simulation process, since the position information of the ball 1 of the operation object is updated, the sate is displayed in the second game screen G2 based on the updated position information. Thereby, only simulation result obtained from the game history information 30 is displayed in the second game screen G2.

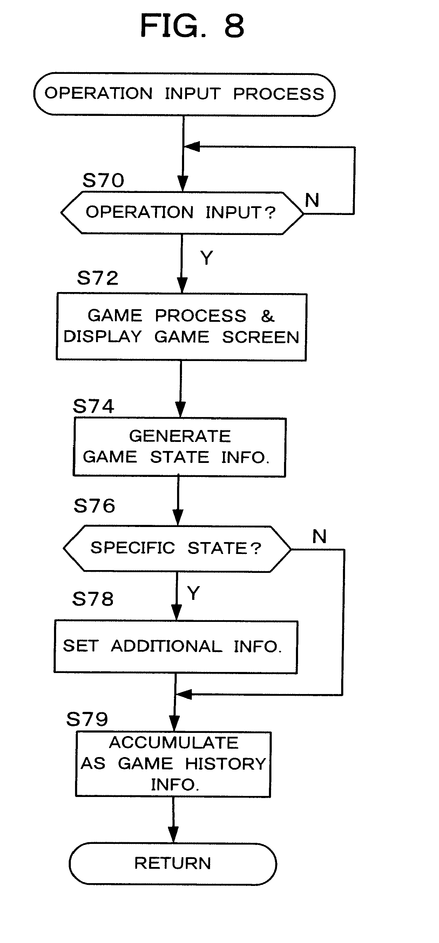

Operation input process is explained according to a flow chart in Fig.8. The operation input process is executed repeatedly by control of the control portion 20 in the terminal device T1. Therefore, the control portion functions as operation process portion. At step S70, it is decided if the operation input on the input portion T1N has been performed by the player PA, and in a case where it is decided to have been performed, procedure is put forward to step S72. At step S72, game process is executed based on operation input, and result of that is displayed in the first game screen G1. Specifically, position information of the balls 1 of operation objects in its own state information storage unit 22a is updated according to inputted operation, and with this update, the display in the first game screen G1 is updated.

Then, at step S74, the game state information Q corresponding to the operation input is generated. Information indicating contents of operation is set in the operation information 31 and the turn corresponding to the ball 1 of operation object is set in the turn information 33. Then, the procedure progresses to step S76 where it is decided if the state of the game comes into the specific state by the operation input. In a case where there are the balls 1...1 which form the specific state set previously as the result of the operation, it is decided that the state comes into the specific state.

For instance, in a case where three successive same colored balls 1 has been piled up, it is decided to come into the specific state. In a case where it is decided to come into the specific state, the procedure progresses to step S78 to set the specific information indicating the specific state in the additional information 34 in the generated game state information Q. In this way, by setting the specific information, it is possible to replay the specific state in the terminal device T of the competitor P. In a case where it is decided not to come into the specific state, step S78 is skipped. The generated game state information Q is accumulated in the game history information 30 in the history information storage unit 21 at step S79.

The simulation process is explained. The simulation process of the present embodiment is controlled by the control portion 20 in the terminal device T2. Thereby, the control portion 20 functions as a history process portion. First, at step S80, the game state information Q included in the received game history information 30 is referred to. Then, at step S82, based on the operation information 31 and the turn information 33 in the referring game state information, the simulation of the ball 1 corresponding to the turn information 33 is executed. In the simulation, the position information of each of the balls 1 stored in the competitor's information storage unit 26 is updated by the operation information 31 as mentioned above.

Successively, at step S84, it is decided if the specific information is set in the additional information 34. In a case where it is decided that the specific information is set, the procedure progresses to step S86 to form an image regarding the specific state. Then, the image is displayed in the second game screen G2, and the procedure progresses to step S88. Thereby, not only the simulation result, but also the specific state which occurred during the play of the player PA can be inserted to be displayed in the terminal device T2 of the player PB. Therefore, for instance, in a case where "successive deletion" is configured as the specific state, the successive deletion being a state in which deletion of ball 1 occurs successively, the state of "successive deletion" is displayed before the simulation result is displayed. As mentioned later, in a case where it is configured that, when the "successive deletion" occurs in the game, some influence is given to the state of the game of the competitor P, the state of "successive deletion" is displayed in the second game screen G2 of the competitor P. This display can also be a warning that the influence due to "successive deletion" will occur to the competitor P.

At step S84, in a case where it is not decided that the specific state is set, step S86 is skipped and the procedure progresses to step S88. At step 88, it is decided if all processes have been finished, the processes for all pieces of the game state information Q included in the received game history information 30. In a case where it is decided that the all processes have been finished, the simulation process is finished. In a case where it is not decided so, the procedure returns to step S80. Additionally, in a case where the next game history information 30 is received while the specific state is displayed at step S86, the simulation process regarding the next game history information 30 starts as an interruption process. Thereby, there is a case where the simulation result of the game history information 30 including the specific information is not displayed and the simulation result of the next game history information 30 is prioritized to be displayed. Because of that, while notifying the player PB of important information, it is possible to display the latest state of the game of the competitor PA.

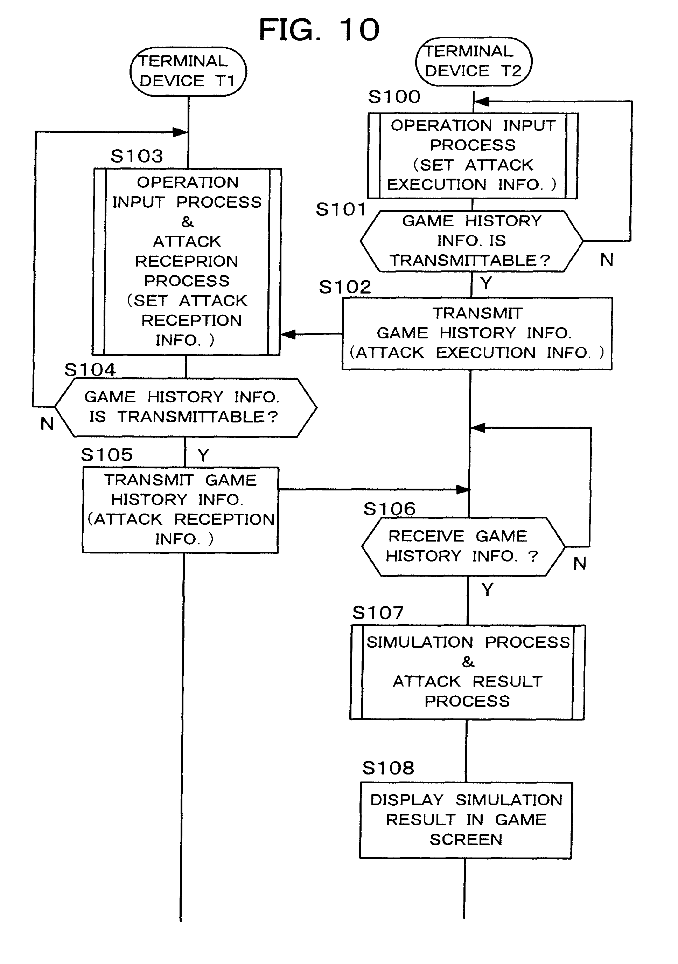

Next, in a case where the player PB of the terminal device T2 performs attack operation, the processes executed in the terminal devices T1 and T2 will be explained by utilizing Fig. 10 to Fig. 12. In order to simplify the explanation, only processes for an attack side will be explained regarding the terminal device T2 and only processes for a reception side will be explained regarding the terminal device T1. In a case where the player PA performs an attack operation, the processes for the attack side is executed in the terminal device T1 and the processes for the reception side is executed in the terminal device T2 in the same way.

First, the above mentioned operation input process is executed in the terminal device T2. Especially when a predetermined attack operation is performed by the player PB, the game state information Q where the the attack execution information is set in the attack information 32 is generated to be accumulated in the game history information 30 in the history information storage unit 21 (step S100). It is decided if the game history information 30 is transmittable (step S101), and the operation input process is continued until it is decided to be transmittable and in a case where it is decided to be transmittable, the game history information 30 in the history information storage unit 21 is transmitted to the terminal device T1 (step S102).

In the terminal device T1, in addition to the above mentioned operation input process, the attack reception process is executed (step S103). In the attack reception process, processes of a case where the attack has been received is executed and the game state information Q is generated, in which the attack reception information indicating that the attack has been received is set in the attack information 32. The attack reception process and the operation input process may be, for instance, executed parallelly by an already-known method such as a time slice method etc. The detail of the attack reception process will be described later. It is decided if the game history information 30 is transmittable (step S104), the operation input process and the attack reception process are executed until it is decided to be transmittable. In a case where it is decided to be transmittable, the game history information 30 is transmitted to the terminal device T2 (step S105).

In the terminal device T2, the reception of the game history information 30 is watched (step S106), and in a case where it has been received, the simulation process and the attack result process are executed for the received game history information 30 (step S107). In the simulation process, the simulation is executed regarding the ball 1 of the operation object as mentioned above, and in the attack result process, the process is executed, the process for indicating that the attack ordered by the player PB has been actually executed in the terminal device T1. The detail of the attack result process will be mentioned later. The simulation process and the attack result process may be executed by already-known parallel process such as a time slice method etc. When the processes regarding the game history information 30 is finished, the simulation result of each of the balls 1 is displayed in the second game screen G2 (step S108).

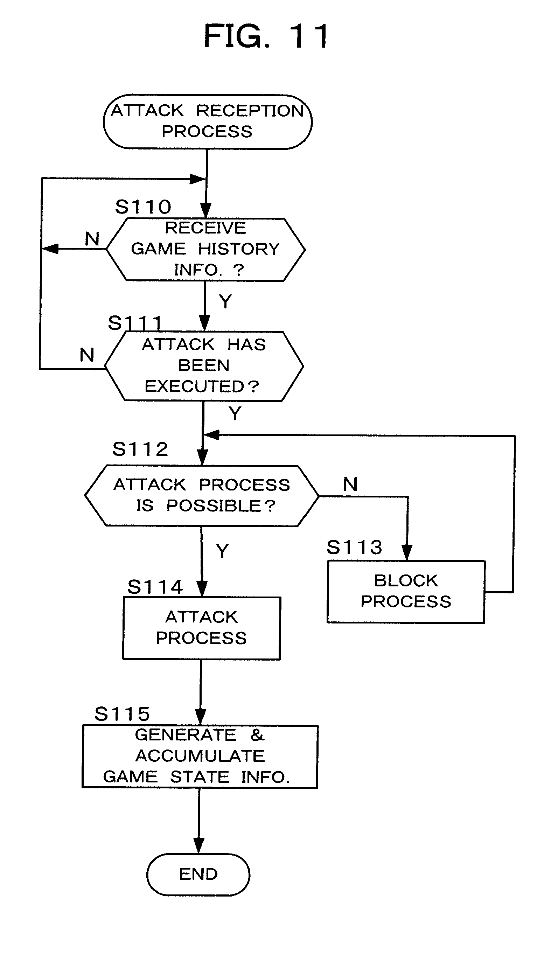

The attack reception process will be explained by using a flow chart in Fig. 11. The attack reception process in the present embodiment is controlled by the control portion 20 in the terminal device T1. In the attack reception process, the process of steps S110 to S115 are executed repeatedly. First, at step S110, it is watched if the game history information 30 in the terminal device T2 has been received, and in a case where it is decided that it has, the procedure progresses to step S111 to decide if an attack has been ordered by the competitor PB. In the received game history information 30, in a case where the game state information Q, in which the attack execution information is set in the attack information 32, is included, it is decided that the attack has been executed. In a case where it is decided the attack has been executed, the procedure progresses to step S112. In a case where it is not decided that the attack has been executed, the procedure returns to S110 to wait for the next reception of the game history information 30.

At step S112, it is decided if it is possible to execute the attack process. The attack process is a process for executing attack to the player PA in the terminal device T1 of the player PA, and for displaying the above mentioned attack screen AT-1 on the monitor T1M of the terminal device T1. In this embodiment, in a case where all of the balls 1 falling on the first game screen G1 has fallen completely, it is decided that it is possible to execute the attack process. In a case where it is not decided that it is possible to execute the attack process, the procedure progresses to step S113 to execute a block process. In the block process, until the balls 1 being displayed in the first game screen fall completely, the next appearance of ball 1 is stopped. The procedure returns to step S112 after the block process.

At step S112, in a case where it is decided that it is possible to execute the attack process, the procedure progresses to step S114 to execute the attack process. In the attack process, a plurality of the attack balls 3 are made to appear in the first game screen G1 based on the number and the kind of the attack balls included in the attack information 32. Additionally, a state in which the avatar C2 of the player PB is attacking is displayed in the second game screen G2. Then, the procedure progresses to step S115 to generate the game state information Q which indicates that the attack has been executed.

Specifically, the attack reception information indicating that the attack has been executed is set in the attack information 32, and the turn in which the attack process has been executed is set in the turn information 33. In addition, information regarding the number and the kind of the attack balls 3 are also included in the attack information 32. Moreover, in a case where the block process at step S113 has been executed, the block information is set in the additional information 34. The generated game state information Q is accumulated in the history information storage unit 21 as the game history information 30.

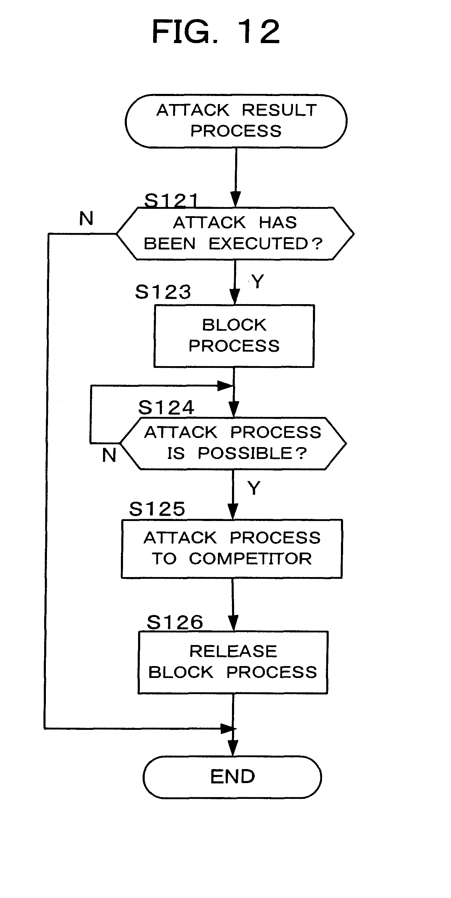

The attack result process will be explained in accordance with the flow chart in Fig. 12. The attack result process of the present embodiment is controlled by the control portion 20 in the terminal device T2. First, at step S121, by referring to the attack information 32 in the received game history information 30, it is decided if the attack has been executed. In a case where the attack reception information is set in the attack information 32, it is decided that the attack has been executed and the procedure progresses to step S123.

In a case where the attack has not been executed, process regarding the attack is not executed and the attack result process is finished. At step S123, in a case where the block information is set in the game state information Q in which the attack reception information is configured (Hereinafter, this game sate information Q is called "the attack game state information Q."), block process is performed. In the block process, it is prohibited for the balls 1 to appear in the second game screen G2, the balls 1 after the turn indicated in the turn information 33 in the attack game state information Q. Next, the procedure progresses to step S124 to decide if it is possible to execute the attack process.

Comparing the turn set in the turn information 33 in the attack game state information Q to the turn being replayed in the second game screen G2, in a case where the turn set in the turn information 33 is the same as the turn being replayed, it is decided that it is possible to execute the attack process. In a case where it is decided that it is possible to execute the attack process, the procedure progresses to step S125 and the attack process is executed. Concretely, based on information regarding the attack balls 3 set in the attack information 32 in the attack game state information Q, the attack balls 3 are made to appear in the second game screen G2. Additionally, a state in which the avatar C1 of the player PB is attacking is displayed in the first game screen G1. After the attack process, the procedure progresses to step S126 to release the block process executed at step S123, i.e., allow the next ball 1 to appear, and the attack result process is finished. In addition, when the next game history information 30 is received while the attack screen is displayed at step S125, as mentioned above at the simulation process, the simulation process regarding the next game history information 30 is started as the interruption process.

As mentioned above, when the player PB has performed attack operation, the attack operation is not reflected directly in the second game screen G2 in the terminal device T1 of the player PB, processes are executed so that the turn in which the attack based on the attack operation is executed in the terminal device T1 of the player PA is the same as the turn in which the attack process is executed in the terminal device T2 of the player PB. Thereby, the state of the game of the competitor PA is replayed more faithfully in the terminal device T1 of the player PB. After finishing the attack process, the procedure progresses to step S126 to release the above mentioned block process.

The present invention is not limited to the above embodiment, and it can be performed in various embodiments. For instance, even in a case where specific operation is not performed like the attack operation by the player P, it may be configured such that , in a case where a predetermined influence condition is satisfied in the state of the game of the player P, a predetermined influence is given to the state of the game of the competitor P. In that case, it may be configured such that a moment when the influence condition is satisfied is associated with "a moment when the attack operation has been performed," and the processes are executed, which are the same as the ones for a case where the attack operation has been performed . Like the game in the present embodiment, in a case of, so to speak, "a falling game of a fighting style", in which, when predetermined kind of balls are piled up in a ball group to build a predetermined shape, they are deleted, in the state of the game as a predetermined influence condition, "a successive deletion" in which successive deletion occurs, "4 rows deletion" in which deletion of balls occurs over 4 rows, and the like are included.

Further, there may be more than 2 terminal devices T composing the game system GS. In that case, in a case where processes is executed regarding a specific terminal device in the plural other terminal devices T, it may be configured that information to be used can be recognized through identification information. A game system utilizing not a network N but an exclusive line can be employed to the communication method among the terminal devices T. Moreover, it does not matter whether or not a connection method is wired.

## Claims

1. A game system, in which a game is executed in each of a plurality of terminal devices, the terminal device having a communication unit capable of sending/receiving a state of the game to/from the other terminal device, and a maximum number of times of communication in a predetermined time period through the communication unit is set previously, wherein the terminal device comprises:
a first display portion which displays the state of the game in its own device; a second display portion which displays the state of the game in the other terminal device;
a game control portion which controls game advancement in its own device; and
a competitor's display control portion which controls display in the second display portion,
the game control portion comprises:
a history information storage unit which stores game history information including history of operation performed by a player on the terminal device;
an operation process unit which, every time an operation is performed by the player on the terminal device, displays the state of the game corresponding to the operation in the first display portion and accumulates operation information corresponding to the operation in the game history information in the history information storage unit;
a transmission decision unit which decides if the game history information is transmittable from the communication unit based on the maximum number of times of communication; and
a history information transmission unit which, when the transmission decision unit decides that the game history information is transmittable, transmits the game history information in the history information storage unit from the communication unit to the other terminal device,
the competitor's display control portion comprises:
a competitor's state storage unit which stores the state of the game in the other terminal device; and
a history process unit which, when the game history information is received from the other terminal device, simulates change of the state of the game in the competitor's state storage unit based on the operation information accumulated in the game history information and displays simulation result in the second display portion.

2. The game system of Claim 1, wherein
the history information transmission unit transmits to the other terminal device the game history information which has been accumulated in the history information storage unit later than the game history information which has been already transmitted.

3. The game system of either Claim 1 or 2, wherein
the operation process unit decides if the state of the game corresponding to the operation performed by the player is a specific state, in a case of the specific state, specific information indicating the specific a state is associated with operation information of the operation and stored in the game history information, and the history process unit, in a case where the game history information includes the specific information, displays the specific state indicated by the specific information in the second display portion before displaying the simulation result.

4. The game system of any one of Claims 1 to 3, wherein the operation process unit, when influence condition to give a predetermined influence to the state of the game in the other terminal device is satisfied in the state of the game in its own device, stores influence execution information in the game history information, the influence execution information indicating that the influence condition has been satisfied, and,
in a case where the game history information received from the other terminal device includes the influence execution information, gives to the state of the game in its own device influence indicated by the influence execution information, and accumulates as the game history information, influence reception information which indicates that the influence has been given, and
the history process unit, in a case where the influence reception information is included in the game history information received from the other terminal device, displays in the second display portion the state of the game where the influence is reflected.

5. The game system of Claim 4, wherein
the operation process unit, in the game executed in its own device, associates timing information with the influence reception information and accumulates the timing information in the game history information, the timing information indicating timing when the influence indicated by the influence execution information has been given to the state of the game in its own device,
the history process unit, in a game displayed in the second display portion, at the timing corresponding to the timing information associated with the influence reception information, displays in the second display portion the state of the game where the influence is reflected.

6. A terminal device in which a predetermined game advancing according to operation performed by a player is executed, a communication unit capable of sending/receiving state of the game to/from another terminal device is mounted, and a maximum number of times of communication in a predetermined time period through the communication unit is set previously, wherein the terminal device comprises:
a first display portion which displays the state of the game in its own device;
a second display portion which displays the state of the game in the other terminal device;
a game control portion which controls game advancement in its own device; and a competitor's display control portion which controls display in the second display portion, the game control portion comprises:
a history information storage unit which stores game history information including history of operation performed by the player on the terminal device;
an operation process unit which, every time an operation is performed by the player on the terminal device, displays the state of the game corresponding to the operation in the first display portion and accumulates operation information corresponding to the operation in the game history information in the history information storage unit;
a transmission decision unit which decides if the game history information is transmittable from the communication unit based on the maximum number of times of communication; and
a history information transmission unit which, when the transmission decision unit decides that the game history information is transmittable, transmits the game history information in the history information storage unit from the communication unit to the other terminal device, the competitor's display control portion comprises:
a competitor's state storage unit which stores the state of the game in the other terminal device; and
a history process unit which, when the game history information is received from the other terminal device, simulates change of the state of the game in the competitor's state storage unit based on the operation information accumulated in the game history information and displays simulation result in the second display portion.

7. A computer program for making a terminal device function, the terminal device being one of a plurality of terminal devices in a game system in which a game is executed in each of the plurality of terminal devices, the terminal device having a communication unit capable of sending/receiving a state of the game to/from the other terminal device, and a maximum number of times of communication in a predetermined time period through the communication unit is set previously, wherein the computer program makes the terminal device function as:
a first display portion which displays the state of the game in its own device;
a second display portion which displays the state of the game in the other terminal device;
a game control portion which controls game advancement in its own device; and a competitor's display control portion which controls display in the second display portion, the game control portion functions as:
a history information storage unit which stores game history information including history of operation performed by a player on the terminal device;
an operation process unit which, every time an operation is performed by the player on the terminal device, displays the state of the game corresponding to the operation in the first display portion and accumulates operation information corresponding to the operation in the game history information in the history information storage unit;
a transmission decision unit which decides if the game history information is transmittable from the communication unit based on the maximum number of times of communication; and
a history information transmission unit which, when the transmission decision unit decides that the game history information is transmittable, transmits the game history information in the history information storage unit from the communication unit to the other terminal device, the competitor's display control portion functions as:
a competitor's state storage unit which stores the state of the game in the other terminal device; and
a history process unit which, when the game history information is received from the other terminal device, simulates change of the state of the game in the competitor's state storage unit based on the operation information accumulated in the game history information and displays simulation result in the second display portion.
